# EUROPEAN PATENT SPECIFICATION

(11) **EP 2 554 431 B1**
(45) Date of publication and mention of the grant of the patent: **25.04.2018**
(21) Application number: 11176095.5
(22) Date of filing: 01.08.2011
(51) Int. Cl.: B60N 2/36, B60N 3/00, B60R 7/04

(54) **Vehicular system for storing documents and objects, in particular for industrial and commercial vehicles**
Fahrzeugsystem zum Speichern von Dokumenten und Gegenständen, insbesondere für Industrie- und Dienstfahrzeuge
Système véhiculaire pour le stockage de documents et d'objets, en particulier pour véhicules industriels et commerciaux

(43) Date of publication of application: 06.02.2013
(73) Proprietor: IVECO S.p.A., 10156 Torino (IT)
(72) Inventor: Agnusdei, Domenico, 10149 TORINO (IT)
(74) Representative: Franzolin, Luigi

(56) References cited:
- WO-A1-00/13931
- US-A- 3 031 242

## Description

### APPLICATION FIELD OF THE INVENTION

The present invention refers to a vehicular system for storing documents and objects, in particular for industrial and commercial vehicles. The characteristics of the system are described more in detail in the independent claims.

### DESCRIPTION OF THE PRIOR ART

Industrial and commercial vehicles are mainly used for transporting goods. This may imply numerous deliveries in the space of a workday. The list of the deliveries, the respective delivery data and traceability documents relating to the goods of each delivery must be at hand. In some moments it is necessary that such documents are stored in a drawer, for example when the driver leaves the vehicle, in order to limit the possibility of losing such documents.

Document holding boards of the prior art are formed by a support board, equipped with a clip on the upper part of the board, in order to hold sheets and documents on one face of the board. The other face of the board may comprise a suction cup with a corresponding articulated arm, in order to fix the board to the windshield and to give it the desired orientation.

Such solution, even though it is very simple, becomes uncomfortable when whole board has to be stored in a drawer. This is because the driver should have at his/her disposal an empty and big enough drawer in order to accommodate the board.

The main problem, in fact, is that the board, possibly comprising the documents, has a considerable width and a small thickness.

Such problem belongs to the larger problem of giving more than one functionality to each component of the vehicle cabin furnishing, in order to limit the corresponding bulk, without reducing its comfort.

US3031242 discloses a portable folding automobile desk and WO2000/13931 discloses a vehicle seat comprising a storage container.

### SUMMARY OF THE INVENTION

Therefore the aim of the present invention is to overcome all the drawbacks set forth above and to indicate a vehicular storing system for documents and objects comprising a document holding board and a compartment that allows to easily store the document holding board with the corresponding documents.

It is object of the present invention to provide a document holding board according to claim 1.

A further object of the present invention is to provide a vehicular document or object holding tray, according to claim 8.

Advantageously the document and object storing system is, in its turn, integrated in a tilt forward system. Thus
the seat back can be used to contain the storing system, having a considerable width with respect to its thickness.

Thus a further object of the present invention is a seat which integrates the present storing system.

It is also object of the present invention an industrial or commercial vehicle comprising the aforementioned seat.

The claims are an integral part of the present description.

### BRIEF DESCRIPTION OF THE FIGURES

Further purposes and advantages of the present invention will become clear from the following detailed description of a preferred embodiment (and its alternative embodiments) and the drawings that are attached hereto, which are merely illustrative and non-limitative, in which:
figure 1 shows a front view of a document holding board;
figure 2 shows a rear view of the board of figure 1,
figures 3, 4 and 5 show an exploded perspective view, from the top to the bottom, of a document holding board according to the previous figures, of an object holding tray and of a portion of the seat back of a vehicle seat,
figures 6 and 7 show perspective views of vehicle seats having a tilt forward seat back portion with an object holding tray equipped with a document holding board integrated in the seat back, the seats being represented in the figures with the seat back portion in vertical and in tilted position, respectively,
figure 8 shows an exploded view of a document holding board according to the previous figures,
figures 9 and 10 show different views of a portion of the document holding board according to the previous figures.
In the figures the same reference numbers and letters identify the same elements or components.

### DETAILED DESCRIPTION OF PREFERRED EMBODIMENTS OF THE

### INVENTION

The present invention refers to a storing system comprising a document holding board 1 and an object holding tray 2.

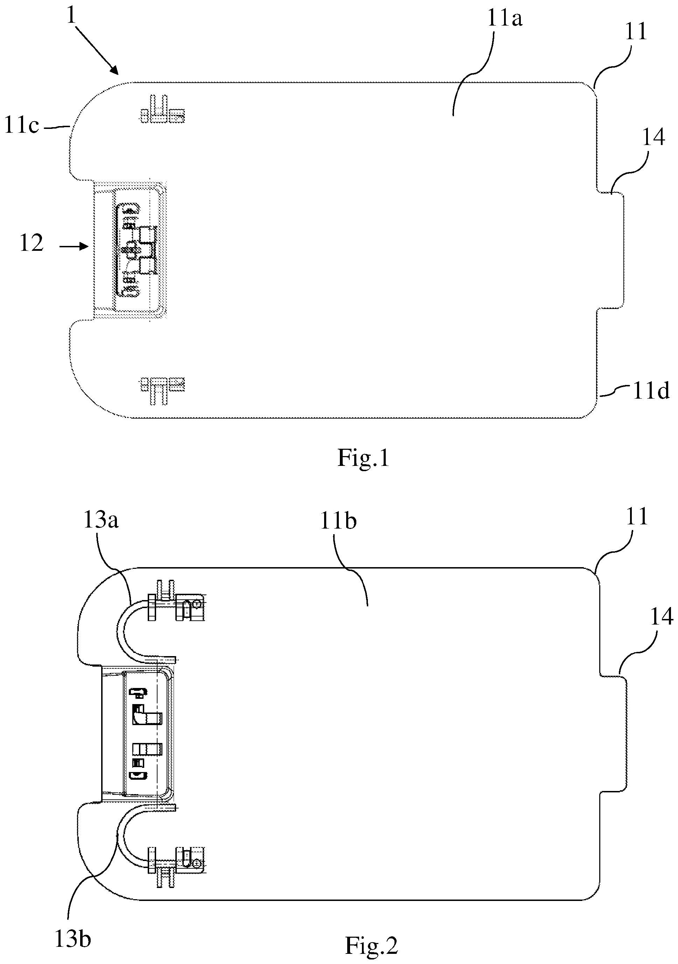

The document holding board is of the type with clip 12, comprising a plate 11 having two opposite faces 11a and 11b. On the front face 11a of figure 1 a clip 12 is connected in order to hold sheets and documents against the plate 11. On the rear face 11b of figure 2, means 13 (13a, 13b) are placed in order to fix the board 1 to a part of the vehicle dashboard, or a suction cup, not shown in the figures, is placed in order to fix the board 1 to the windshield.

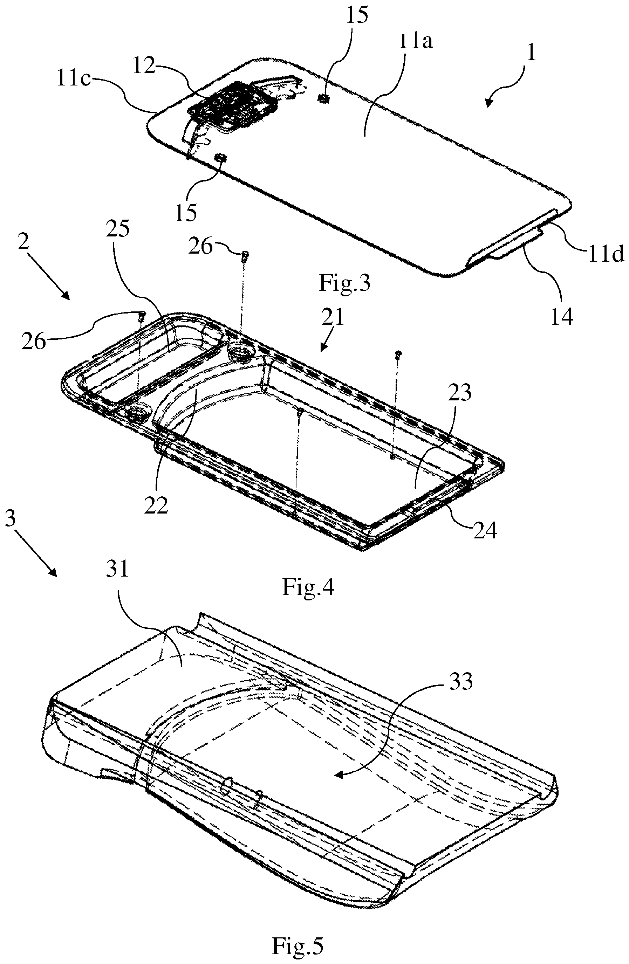

The document holding board 1 according to the present invention comprises first coupling means 14 on a container or tray 2 shown in figure 4.

Preferably, such coupling means 14 are formed by a sort of tongue particularly large in correspondence of the first edge of the board.

Moreover the document holding board 1, comprises preferably a pair of magnets 15 placed at the sides of the board, in correspondence of a second edge of the board, opposite to the first edge, in a position corresponding to metal parts of the tray 2, for example corresponding to the heads of the fixing screws 26 of the tray 2 to the seat back portion 3.

The tray 2 comprises complementary means 24 in order to allow the coupling of the document holding board 1 on the tray 2, in order to substantially define a cover for the tray 2. In other words, the tray 2 defines a housing 21 for documents or for objects in general and comprises an opening that can be completely closed by means of the association of the document holding board 1 with the tray 2.

Thanks to the aforementioned first coupling means 14, the document holding board 1 becomes integral with the tray 2, and cooperates with the latter for containing objects and documents.

Figure 5 shows at least a portion of a tilt seat back 3 of a vehicle seat 4.

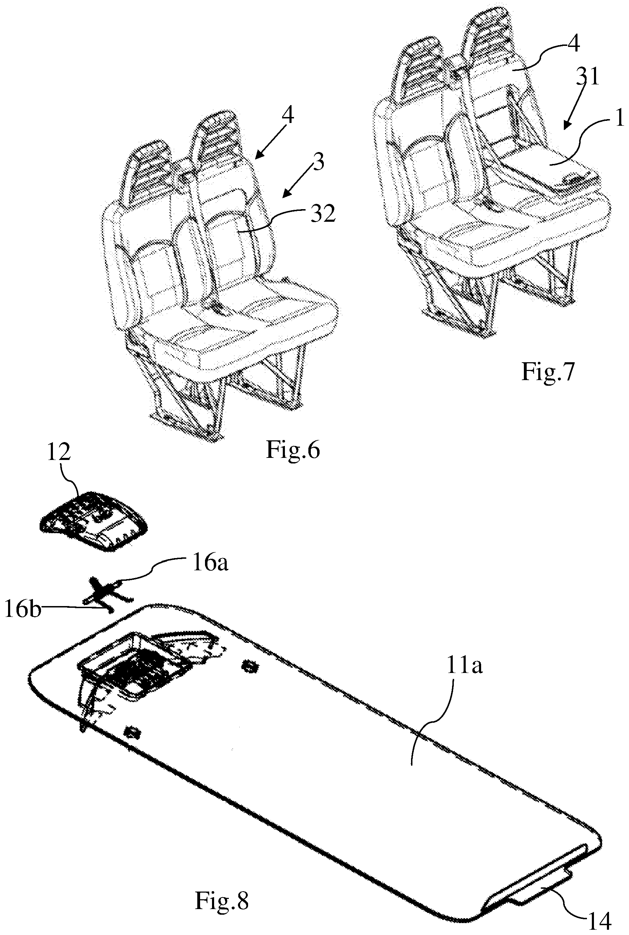

Such tray is preferably integrated in the rear face 31 of the seat back 3, so that the document holding board 1 and the tray 2 are reachable when the seat back portion 3 is tilted forward, as shown in figure 7. Vice versa, when the seat back 3 is in vertical position, as shown in figure 6, the seat back 3 shows the front face 32, preferably padded, hiding the document holding board 1 and the tray 2. The rear part 31 of the seat back 3, thus, comprises a recess 33 suitable to accommodate and to integrate the object holding tray 2.

The document holding board 1, according to the alternative embodiment shown in the figures, comprises a clip 12, shown better in the exploded view of figure 8 and in the following figures, wherein it is possible to see a spring 16a and a corresponding support axis 16b in order to support and to press the clip 12 against a face 11a of the document holding board 1, and comprises a pair of hooks 13a and 13b being substantially U-shaped. Such shape identifies a respective lying plane. One end of each hook is hinged to the rear face 11b of the document holding board 1 so that the hooks may rotate around such end between a closed position, namely with the lying plane completely superimposed/coinciding to/with the face 11b, shown in figure 2, and an open position, namely with the respective lying plane perpendicular to the rear face 11b, so that it is possible to hang the document holding board 1 to a part of the vehicle dashboard, preferably to the steering wheel spokes.

The board is preferably rectangular-shaped, preferably with A4 size, and the hooks are placed near the two opposite sides at the same distance from a side adjacent to the first two. Thus when the board is hanging, an A4 sheet is kept in vertical position.

According to a preferred embodiment of the invention, the hooks 13a and 13b comprise small springs suitable to bring the hooks back automatically in closed position.

The housing 21 in the tray 2, according to a preferred alternative embodiment, comprises two distinct compartments: a first compartment 23 for housing objects and documents, and a second compartment 25 suitable for housing the fixing means 13. The two compartments are divided by an appropriate dividing wall 22. Advantageously, due to the jolts the vehicle may receive, the objects that are possibly present in the tray cannot slide towards the area of the housing of the tray 2 that is intended to house the fixing means 13. Thus the coupling of the document holding board 1 with the tray 2 is always immediate.

According to another aspect of the invention, the document holding board, in correspondence of an edge 11d opposite to the edge 11c where the clip is placed 12, comprises a shaped part 14, possibly tapered both in the plane of the plate and in its respective thickness, in order to engage such shaped part 14 in a groove 24 placed in a perimetral wall of the tray 2, in correspondence of the respective opening of the tray. Thus the document holding board may be engaged on the tray 2 cooperating with it for containing objects. Thus the opening of the tray lies on a plane.

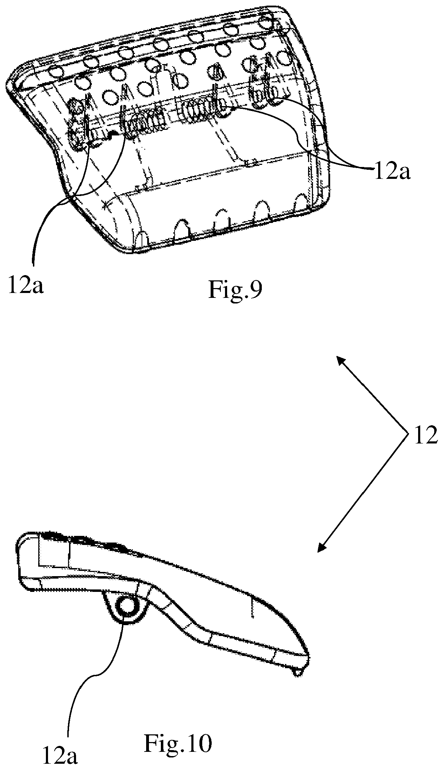

Figure 9 shows a clip 12 by means of a view from the bottom, namely from the interface side between the clip 12 and the face 11a of the board 1. It is possible to see a plurality of loops, an axis 16a being suitable to pass through them, a spring 16b winding around such axis for pushing the clip 12 in closed position, in order to tighten and keep sheets and documents in position. Thus the clip is concave shell-shaped, within which the loops 12a are made.

Figure 10 shows a lateral view of the clip according to figure 9.

Figures 6 and 7 show, by way of example, a double seat module, namely formed by two seats 4. At least one of the two seats 4 comprises the portion of tilt seat back 3 described above.

According to other alternative embodiments, the module may be a one-seat module or a three-seat module. In case of multiple modules, more than one seat back 3 may be tilted and at least one of them may contain the storing system that is object of the present invention. The fact that a portion or the whole seat back can be tilted is not relevant.

It will be apparent to the person skilled in the art that other alternative and equivalent embodiments of the invention can be conceived and reduced to practice without departing from the scope of the claims. The advantages deriving from the use of this invention are evident.

The present invention allows an easier and more rational storing of documents and of objects. Moreover, it is easier to associate the document holding board 1 with the corresponding tray 2, both thanks to the coupling means 14,24 and above all thanks to the presence of a dividing wall 22 that prevents objects from interfering with the fixing means 13a, 13b during the association of the document holding board 1 with the respective tray 2.

From the description set forth above it will be possible for the person skilled in the art to embody the invention with no need of describing further construction details.

## Claims

1. Vehicular document holding board (1) of the type with a clip (12) for holding sheets and documents, comprising fixing means (13) of the document holding board (1) for connecting to a part of a vehicle and coupling means (14, 15) for connecting with a vehicular holding tray (2) for documents and/or objects, **characterized in that** said coupling means (14, 15) are complementary to a second coupling means (24) of said vehicular holding tray (2) for documents and/or objects, said coupling means comprise a tongue (14) on a first edge of the board and at least a magnet (15) on a second edge of the board, opposite to said first edge.

2. Board according to claim 1, wherein said fixing means (13) comprise a suction cup.

3. Board according to claim 1, wherein said fixing means (13) comprise a pair of hooks (13a, 13b) substantially U-shaped connected to a rear face (11b) of the document holding board (1) and placed so that they keep the document holding board (1) in vertical position, when hanging from a part of the vehicle.

4. Board according to claim 3, being preferably rectangular-shaped and wherein said hooks (13a, 13b) are placed near the two opposite sides at the same distance from a side adjacent to the first two.

5. Board according to one of the claims 3 or 4, wherein such U-shape identifies a respective lying plane and wherein an end of each hook is hinged to the rear face (11b) of the document holding board (1) so that the hooks may rotate around such end between a closed position, with the respective lying plane completely superimposed/coinciding to/with the rear face (11b), and an open position, with the respective lying plane perpendicular to the rear face (11b).

6. Board according to one of the claims 3 or 4 or 5, wherein said hooks (13a, 13b) are spaced and dimensioned in order to allow hanging the document holding board (1) to a vehicle steering wheel.

7. Board according to any of the previous claims, wherein the document holding board (1) comprises a first edge (11c) where the clip (12) is placed and a second edge (11d), opposite to the first one (11c) where said coupling means (14) for connecting with a vehicular object and/or document holding tray (2) are placed, said coupling means being defined by the shape of said second edge (11d), being tapered in the plane of the board (1) and/or in a respective thickness.

8. Vehicular object and/or document holding tray (2), comprising an internal housing (21) equipped with an access opening and a second coupling means (24) for connecting with a document holding board (1) according to any of claims 1 to 8 in order to cooperate with the document holding board (1) for containing objects and/or documents, wherein said second coupling means comprise a groove (24) in a perimetral surface of the tray, near said access opening, suitable to allow an engagement of a tapered second edge (11d) of the document holding board (1).

9. Tray according to claim 8, wherein said document holding board (1) is of the clip type.

10. Tray according to claim 9, wherein said housing (21) is divided into a first compartment (23) intended to accommodate objects and/or documents and at least a second compartment (25) intended to accommodate said first coupling means (14), said at least two compartments (23, 25) being separate by a dividing wall (22), dimensioned so that it prevents the passage of objects and/or documents from said first compartment (23) to said second compartment (25).

11. Tray according to one of the claims from 8 to 10, having such depth that it can be integrated in a seat back (3) of a vehicle seat (4).

12. Vehicle seat (3) of the at least partially tilting type, comprising a rear part (31) equipped with a recess (33) which accommodates an object and/or document holding tray according to any of the claims from 8 to 11.

13. Industrial or commercial vehicle comprising at least a seat (3) of the at least partially tilting type according to claim 12.

## Patentansprüche

1. Fahrzeugdokument-Haltebrett (1) vom Typ mit einem Bügel (12) zum Halten von Blättern und Dokumenten, umfassend Befestigungsmittel (13) des Dokument-Haltebretts (1) zum Verbinden mit einem Teil eines Fahrzeugs und Kupplungsmittel (14,15) zum Verbinden mit einer Fahrzeug-Halteablage (2) für Dokumente und/oder Objekte, **dadurch gekennzeichnet, dass** die Kupplungsmittel (14,15) komplementär zu zweiten Kupplungsmitteln (24) der Fahrzeug-Halteablage (2) für Dokumente und/oder Objekte sind, welche Kupplungsmittel eine Zunge (14) an einer ersten Kante des Bretts und zumindest einen Magneten (15) an einer zweiten Kante des Bretts gegenüberliegend der ersten Kante umfassen.

2. Brett gemäß Anspruch 1, bei welchem die Befestigungsmittel (13) einen Saugnapf umfassen.

3. Brett gemäß Anspruch 1, bei welchem die Befestigungsmittel (13) ein Paar von Haken (13a,13b) umfassen, die im wesentlichen U-förmig sind und mit einer Rückseite (11b) des Dokument-Haltebretts (1) verbunden sind und derart angeordnet sind, dass sie das Dokument-Haltebrett (1) in der vertikalen Position halten, wenn es von einem Teil des Fahrzeugs herunterhängt.

4. Brett gemäß Anspruch 3, welches vorzugsweise rechteckig ist und wobei Haken (13a,13b) nahe der zwei gegenüberliegenden Seiten in dem gleichen Abstand von einer Seite benachbart zu den ersten beiden angeordnet sind.

5. Brett gemäß einem der Ansprüche 3 oder 4, bei welchem die Form mit einer im wesentlichen liegenden Ebene zusammenfällt und bei welcher ein Ende jedes Hakens an die Rückseite (11b) des Dokument-Haltebretts (1) angelenkt ist, so dass die Haken um dieses Ende zwischen einer geschlossenen Position, in der die im wesentlichen liegende Ebene vollständig mit der Rückseite (11b) übereinstimmt/zusammenfällt, und einer offenen Position drehbar sind, in welcher die jeweilige liegende Ebene senkrecht zu der Rückseite (11b) ist.

6. Brett gemäß einem der Ansprüche 3 oder 4 oder 5, bei welchem die Haken (13a,13b) derart beabstandet und dimensioniert sind, dass sie ein Hängen des Dokument-Haltebretts (1) an ein Fahrzeuglenkrad gestatten.

7. Brett gemäß einem der vorhergehenden Ansprüche, bei welchem das Dokument-Haltebrett (1) eine erste Kante (11c) umfasst, an welcher der Bügel (12) angeordnet ist, und eine zweite Kante (11d), gegenüberliegend der ersten (11c), an welcher die Kupplungsmittel (14) zur Verbindung mit einem Fahrzeugobjekt und/oder der Dokument-Halteablage (2) angeordnet sind, wobei die Kupplungsmittel durch die Form der zweiten Kante (11d) bestimmt sind, welche in der Ebene des Bretts (1) und/oder in einer entsprechenden Dicke zusammenläuft.

8. Fahrzeugobjekt- und/oder Dokument-Halteablage (2), umfassend ein inneres Gehäuse (21) mit einer Zugangsöffnung und einem zweiten Kupplungsmittel (24) zur Verbindung mit einem Dokument-Haltebrett (1) gemäß einem der Ansprüche 1 bis 8 zum Zusammenwirken mit dem Dokument-Haltebrett (1) zur Aufnahme von Objekten und/oder Dokumenten, wobei die zweiten Kupplungsmittel eine Nut (24) an einer Umfangsoberfläche der Ablage umfassen, in der Nähe der Zugangsöffnung, geeignet zur Ermöglichung eines Eingriffs einer zusammenlaufenden zweiten Kante (11d) des Dokument-Haltebretts (1).

9. Ablage gemäß Anspruch 8, bei welcher das Dokument-Haltebrett (1) vom Bügeltyp ist.

10. Ablage gemäß Anspruch 9, bei welcher das Gehäuse (21) unterteilt ist in eine erste Abteilung (23) zur Aufnahme von Objekten und/oder Dokumenten und zumindest ein zweites Abteil (25) zur Aufnahme der ersten Kupplungsmittel (14), welche zumindest zwei Abteile (23,259 durch eine Trennwand (22) getrennt sind, die derart bemessen ist, dass sie den Durchgang von Objekten und/oder Dokumenten von dem ersten Abteil (23) zum zweiten Abteil (25) verhindert.

11. Ablage gemäß einem der Ansprüche 8 bis 10, mit einer derartigen Tiefe, dass sie in einen Sitzrücken (3) eines Fahrzeugsitzes (4) integriert werden kann.

12. Fahrzeugsitz (3) von zumindest teilweise neigbaren Typ, umfassend einen rückseitigen Teil (31), der mit einer Ausnehmung (33) ausgestattet ist, welche eine Objekt- und/oder Dokumenten-Halteablage gemäß einem der Ansprüche 8 bis 11 umfasst.

13. Industrie- oder Nutzfahrzeug, umfassend zumindest einen Sitz (3) vom zumindest teilweise neigbaren Typ gemäß Anspruch 12.

## Revendications

1. Carte de support de documents de véhicule (1) du type muni d'une pince (12) pour /supporter des feuilles et des documents, comprenant des moyens de fixation (13) de la carte de support de documents (1) pour une connexion sur une partie d'un véhicule et des moyens de couplage (14, 15) pour une connexion avec un plateau de support de véhicule (2) pour des documents et/ou des objets, **caractérisée en ce que** lesdits moyens de couplage (14, 15) sont complémentaires par rapport à un deuxième moyen de couplage (24) dudit plateau de support de véhicule (2) pour des documents et/ou des objets, lesdits moyens de couplage comprennent une languette (14) sur un premier bord de la carte et au moins un aimant (15) sur un second bord de la carte qui est opposé audit premier bord.

2. Carte selon la revendication 1, dans laquelle lesdits moyen de fixation (13) comprennent une ventouse.

3. Carte selon la revendication 1, dans laquelle lesdits moyens de fixation (13) comprennent une paire de crochets (13a, 13b) sensiblement en forme de U qui sont connectés à une face arrière (11b) de la carte de support de documents (1) et qui sont placés de telle sorte qu'ils maintiennent la carte de support de documents (1) en position verticale, lorsqu'elle est suspendue au niveau d'une partie du véhicule.

4. Carte selon la revendication 3, laquelle est de préférence de forme rectangulaire et dans laquelle lesdits crochets (13a, 13b) sont placés à proximité des deux côtés opposés à la même distance d'un côté qui est adjacent aux deux premiers.

5. Carte selon l'une quelconque des revendications 3 ou 4, dans laquelle cette forme en U identifie un plan horizontal de positionnement et dans laquelle une extrémité de chaque crochet est articulée sur la face arrière (11b) de la carte de support de documents (1) de telle sorte que les crochets puissent tourner autour de cette extrémité entre une position fermée dans laquelle le plan horizontal de positionnement respectif est complètement superposé à/coïncide complètement avec la face arrière (11b), et une position ouverte dans laquelle le plan horizontal de positionnement respectif est perpendiculaire à la face arrière (11b).

6. Carte selon l'une quelconque des revendications 3 ou 4 ou 5, dans laquelle lesdits crochets (13a, 13b) sont espacés et sont dimensionnés de manière à ce qu'ils permettent la suspension de la carte de support de documents (1) sur un volant de véhicule.

7. Carte selon l'une quelconque des revendications qui précèdent, dans laquelle la carte de support de documents (1) comprend un premier bord (11c) au niveau duquel la pince (12) est placée et un second bord (11d), opposé au premier bord (11c), au niveau duquel lesdits moyens de couplage (14) pour réaliser une connexion avec un plateau de support d'objets et/ou de documents de véhicule (2) sont placés, lesdits moyens de couplage étant définis par la forme dudit second bord (11d) qui est aminci dans le plan de la carte (1) et/ou suivant une épaisseur respective.

8. Plateau de support d'objets et/ou de documents de véhicule (2), comprenant un logement interne (21) qui comporte une ouverture d'accès et un deuxième moyen de couplage (24) pour une connexion avec une carte de support de documents (1) selon l'une quelconque des revendications 1 à 8 afin de coopérer avec la carte de support de documents (1) pour contenir des objets et/ou des documents, dans lequel ledit second moyen de couplage comprend une gorge (24) au niveau d'une surface de périmètre du plateau, à proximité de ladite ouverture d'accès, qui convient pour permettre un engagement d'un second bord aminci (11d) de la carte de support de documents (1).

9. Plateau selon la revendication 8, dans lequel ladite carte de support de documents (1) est du type à pince.

10. Plateau selon la revendication 9, dans lequel ledit logement (21) est divisé selon un premier compartiment (23) qui est destiné à recevoir des objets et/ou des documents et au moins un deuxième compartiment (25) qui est destiné à recevoir lesdits premiers moyens de couplage (14), lesdits au moins deux compartiments (23, 25) étant séparés par une paroi de division (22) qui est dimensionnée de telle sorte qu'elle empêche le passage d'objets et/ou de documents depuis ledit premier compartiment (23) jusqu'audit second compartiment (25).

11. Plateau selon l'une quelconque des revendications 8 à 10, présentant une profondeur qui est telle qu'il peut être intégré au niveau d'un dossier de siège (3) d'un siège de véhicule (4).

12. Siège de véhicule (3) du type au moins partiellement inclinable, lequel comprend une partie arrière (31) qui comporte un évidement (33) qui reçoit un plateau de support d'objets et/ou de documents selon l'une quelconque des revendications 8 à 11.

13. Véhicule industriel ou commercial comprenant au moins un siège (3) du type au moins partiellement inclinable selon la revendication 12.
